# NEUE EUROPÄISCHE PATENTSCHRIFT

(11) **EP 1 572 404 B2**
(45) Veröffentlichungstag und Bekanntmachung des Hinweises auf die Entscheidung über den Einspruch: **25.04.2012**
(45) Hinweis auf die Patenterteilung: 28.11.2007
(21) Anmeldenummer: 03799449.8
(22) Anmeldetag: 18.12.2003
(51) Int. Cl.: B23B 51/04

(54) **TIEFLOCHBOHRER MIT AUSTAUSCHSÄTZEN FÜR VERSCHIEDENE DURCHMESSER**
DEEP HOLE DRILL WITH REPLACEMENT SETS FOR DIFFERENT DIAMETERS
FORET LONG AVEC ENSEMBLE DE REMPLACEMENT POUR DES DIAMETRES DIFFERENTES

(30) Priorität: 19.12.2002 DE 20219754 U
(43) Veröffentlichungstag der Anmeldung: 14.09.2005
(73) Patentinhaber: Gühring, Jörg, 72458 Albstadt (DE)
(72) Erfinder: KÜNZEL, Lothar, 72124 Pliezhausen (DE)
(74) Vertreter: Angermeier, Simon Andreas
(86) Internationale Anmeldenummer: PCT/DE2003/004274
(87) Internationale Veröffentlichungsnummer: WO 2004/056518

(56) Entgegenhaltungen:
- EP-A- 0 418 437
- FR-A- 892 182
- US-A- 3 094 016
- US-A- 3 422 706
- US-A- 4 437 802
- 'Auszug aus dem Prospekt "botek-Vollbohrkopf Typ 42" der Firma botek Präzisionsbohrtechnik GmbH, gedruckt April 2002' April 2002,
- 'Kopien von Zeichnungen und Verkausunterlagen für den "Aufbohrkopf Typ 32" der Firma botek Präzisionstechnik GmbH, teilweise datiert 1998' 1998,
- 'Auszug aus dem Prospekt "1000 D Werkzeuge für Bearbeitungszentren" der Firma Hertel AG, gedruckt November 1990' November 1990,
- 'Datenblatt "Tiefbohrwerkzeuge Typ 01" der Firma botek Präzisionstechnik GmbH' 24 Februar 1999,
- 'Prospekt "Vollbohrköpfe Typ 11 / Typ 61" der Firma botek Präzisionstechnik GmbH' Mai 2001,
- 'Auszug aus dem "Katalog 5020-2D" der Firma Hertel AG' Februar 1986,
- 'VDI-Richtlinie 3210, Blatt 1, Punkt 1' März 2006,
- 'VDI-Richtlinie 3210' Juni 1974,

## Beschreibung

Die Erfindung betrifft einen Tieflochbohrer mit einem Schneidenträger, einem auswechselbaren Schneideinsatz und zumindest einer auswechselbaren Führungsleiste, wobei der Schneidenträger für einen vorbestimmmten Nenndurchmesserbereich eingesetzt wird, sowie auf ein Sortiment zur Bestückung eines Schneidenträgers für derartige Tieflochbohrer, wobei mit diesem Sortiment ein neuartiges Bestückungsverfahren ausführbar ist. Solche Bohrer sind z.B. aus dem Dokument EP-A-0418437 bekannt.

Bei Einlippen-Tieflochbohrern werden die Späne mittels eines zugeführtes Schmiermittels über die aufgrund der Einlippengeometrie relativ große, gerade genutete Spannut abgeführt. Der eigentliche Schneidvorgang erfolgt dabei über eine Schneide des Bohrers, die sich beispielsweise auf einer Schneidplatte bzw. einem Schneideinsatz befinden kann, die an den Schneidenträger angeschraubt wird. Gleichzeitig wird das Werkzeug beim Bohrvorgang von entsprechenden Führungsleisten im Bohrloch über seinen Umfang abgestützt.

Tieflochbohrer mit solchen auswechselbaren Schneideinsätzen/ Führungsleisten zeichnen sich durch eine hohe Wirtschaftlichkeit bei guter Zerspanungsleistung aus. Denn bei Verschleiß der Schneiden, bzw. der Führungsleisten muß nicht ein teueres Gesamtwerkzeug angeschafft werden, sondern nur der relativ günstige Schneideinsatz, bzw. die Führungsleiste. Darüber hinaus kann der Schneidenträger nicht nur für einen Nenndurchmesser verwendet werden, sondern innerhalb eines ganzen Nenndurchmesserbereichs.

Ein solches Werkzeug ist beispielsweise in dem Prospekt "Tieflochbohrwerkzeuge Typ 01", Nr. 01-0501-01 der Firma "botek Präzisionsbohrtechnik GmbH" gezeigt. Dieses Bohrwerkzeug ist mit einem mit einer Spannhülse verlöteten Bohrerschaft und einem daran anschließenden Bohrkopf ausgestattet. Der Bohrkopf weist dabei für eine Schneidplatte sowie für zwei Führungsleisten entsprechende Sitze mit Gewindebohrungen auf, über die die Schneidplatte und die beiden Führungsleisten am Bohrkopf anschraubbar sind. Die Justierung der Lage der Schneidkante, d.h. die Einstellung des genauen Nenndurchmessers innerhalb des Nenndurchmesserbereichs, für den der Tieflochbohrer vorgesehen ist, erfolgt dabei über eine austauschbare Einstellplatte, die einen Anschlag für die Schneidplatte bildet. Der Anschlag befindet sich dabei auf der der Nebenschneide gegenüberliegenden Seite der Wechselplatte, d.h., bevor die Wechselplatte am Bohrkopf angebracht wird, wird eine für den gewünschten Nenndurchmesser geeignet gewählte Einstellplatte parallel zur Werkzeuglängsachse an den Bohrkopf geschraubt, so dass die Wechselplatte mit ihrer der Nebenschneide gegenüberliegenden Seite an der Einstellplatte anliegt. Die Dicke der eingesetzten Einstellplatte bestimmt somit die Lage der Nebenschneide und somit den Nenndurchmesser der Bohrung. Für eine Voreinstellung der Anlagefläche der Einstellplatte am entsprechenden Werkzeugrücken ist neben der Einstellplatte selbst noch ein Einstellkeil vorgesehen, der in eine auf der Rückseite der Einstellplatte endende Bohrung eingeschoben und mit einer Schraube fixiert werden kann. Somit war zwar aus dem oben genannten Prospekt der Firma botek ein Tieflochbohrer mit einem Schneidenträger, einem auswechselbaren Schneideinsatz und zwei auswechselbaren Führungsleisten bekannt, wobei der Schneidenträger für einen vorbestimmten Nenndurchmesserbereich eingesetzt wird. Dabei ist jedem Nenndurchmesser in dem Nenndurchmesserbereich ein gesonderter Bausatz aus einem Schneideinsatz und zwei Führungsleisten zugeordnet, wobei für die Führungsleisten am Schneidenträger feste Anschläge ausgebildet sind und für den Schneideinsatz ein Anschlag in Form einer durchmesserabhängig gewählten, wechselbaren Einstellplatte vorgesehen ist. Am Schneideinsatz ist eine Durchgangsbohrung für eine in eine Gewindebohrung am Schneidenträger eingeschraubte Schraube vorgesehen ist, die den Schneideinsatz gegen die Einstellplatte und gegen eine gerillte Rückfläche drückt. Zum Einstellen der Lage der Schneidkante auf den gewünschten Nenndurchmesser, bzw. zum Bestücken des Schneidenträgers mit den für den entsprechenden Nenndurchmesser vorgesehenen Komponenten sind daher mehrere zeitaufwendige Arbeitsgänge nötig.

Aufgabe der Erfindung ist es deshalb, einen Tieflochbohrer mit einem für mehrere Nenndurchmesser in einem Nenndurchmesserbereich einsetzbaren Schneidenträger sowie einem auswechselbaren Schneideinsatz und zumindest einer auswechselbaren Führungleiste zu schaffen, der einen einfachen Aufbau aufweist und ein leicht handhabbares und schnelles Einstellen des Werkzeugs auf den gewünschten Nenndurchmesser erlaubt.

Diese Aufgabe wird durch die Merkmale des Anspruchs 1 gelöst. Vorteilhafte Weiterbildungen der Erfindung sind Gegenstand der Unteransprüche. Das neuartige Bestückungsverfahren, das eine selbständige Erfindung darstellt, jedoch nicht unter den Schutzbereich der Patentansprüche fällt, ist wie folgt gekennzeichnet: Das Verfahren erlaubt ein nenndurchmessergerechtes Bestücken eines innerhalb eines Nenndurchmesserbereiches (ΔND) universell einsetzbaren Schneidenträgers (1) eines Tieflochbohrers, wie z.B. eines Bohrers insbesondere nach einem der Ansprüche 1 bis 8, mit einem aus einer auswechselbaren Schneideinsatz (2) und zumindest einer auswechselbaren Führungsleiste (3, 30) bestehenden, für einen bestimmten Nenndurchmesser vorgesehenen Bausatz. Das Verfahren zeichnet sich durch folgende Schritte aus:
Auswählen eines für einen bestimmten Nenndurchmesser vorgesehenen Bausatzes aus einem alle gewünschten Nenndurchmesser (ND₁ - ND₅) in einem festgelegten Nenndurchmesserbereich (ΔND) umfassenden Bausatzsortiment,
Fixierung der Lage des Schneideinsatzes (2) und der zumindest einen Führungsleiste (3, 30) des ausgewählten Bausatzes mittels fester Anschläge (9, 10, 12) am Schneidenträger (1).

Dabei ist dem Schneidenträger, der in einem bestimmmten Nenndurchmesserbereich eingesetzt wird, eine Auswahl von Bausätzen zugeordnet. Für jeden gewünschten Nenndurchmesser steht ein aus einem Schneideinsatz und zumindest einer entsprechenden Führungsleiste bestehender Bausatz bereit. Schneideinsätze und Führungsleisten weisen dabei Gegenanschlagflächen auf, über die sie sich über feste, universal passende Anschläge am Schneidenträger in der durch die Anschläge vorgegebenen Lage fixieren lassen. Es muß nur noch der einem gewünschten Nenndurchmesser entsprechende Bausatz aus einem Sortiment an Bausätzen ausgewählt und an dem Schneidenträger mittels der dortigen festen Anschläge fixiert werden.

Auf diese Weise gelingt ein einfaches und zeitsparendes Einstellen des Bohrers auf den gewünschten Nenndurchmesser. Denn neben dem Anbringen des gewünschten Schneideinsatzes und der entsprechenden Führungsleisten unter Lagefixierung durch die schon am Schneidenträger vorhandenen Anschläge sind keine weiteren Arbeitsgänge nötig. Die Geometrie des Schneidenträgers ist für alle zugeordneten Bausätze universell passend ausgestaltet, so dass die Durchmessereinstellung allein durch Auswahl des entsprechenden Bausatzes erfolgt. Insgesamt lässt sich so eine hohe Genauigkeit der Durchmessereinstellung erreichen, denn etwaige Fehljustagen sind durch die fest vorgegebenen Anschläge, die die Lage des jeweiligen Schneideinsatzes und der Führungsleisten alleine definieren, unmöglich gemacht. Denn ein derartiges zusätzliches Justieren entfällt völlig.

Auch zusätzliche Bauteile, die für eine derartige Justierung nötig wären, werden beim erfindungsgemäßen Tieflochbohrer nicht mehr benötigt. Neben der verringerten Teilezahl wird beim erfindungsgemäßen Tieflochbohrer auch eine im Vergleich zu entsprechenden bekannten Werkzeugen erhöhte Stabilität und Festigkeit des Schneidenträgers erreicht, da der Schneidenträger nicht durch zusätzliche Ausnehmungen und Gewindebohrungen für Einstellplatten etc. geschwächt ist, sondern den vorgegebenen Raum möglichst vollständig ausfüllt.

Dadurch eignet sich der erfindungsgemäße Tieflochbohrer schon für Durchmesserwerte ab 16 mm bis zu ca. 40 mm, die im Vergleich zu Nenndurchmessern, die bei herkömmlichen Werkzeugen (botek: ab 18 mm aufwärts) zu erzielen sind, sehr klein sind. Versuche haben ergeben, dass dabei mit Verhältnissen Bohrtiefe zu Durchmesser von 10:1 bis 80:1 bei einer Werkzeuggesamtlänge bis zu 3000 mm gute Ergebnisse erreicht werden.

Der Schneideinsatz wird mit dem Schneidenträger verschraubt. Dazu ist am Schneideinsatzsitz auf dem Schneidenträger eine Gewindebohrung vorgesehen, an den Schneideinsätzen dagegen eine Durchgangsbohrung, so dass die Schneideinsätze an den Schneidenträger angeschraubt werden können. Der Abstand der Durchgangsbohrung zu den Gegenanschlagsflächen ist dabei bei allen Schneideinsätzen gleich, d.h. alle Schneideinsätze passen auf die durch den universellen Schneidenträger vordefinierte Geometrie. Die Gewindebohrung am Schneideinsatzsitz weist dabei einen Versatz zu einer Durchgangsbohrung am Schneideinsatz aufweist, so dass der Schneideinsatz am. Anschlag angepresst wird, wenn der Schneideinsatz am Schneideinsatzsitz verschraubt wird. Der Versatz ist dabei sehr klein (in der Größenordnung von 1/100 mm), so dass es zu keiner Verformung des Schneideinsatzes oder des Schneidenträgers kommt, sondern lediglich zu einer Fixierung der Lage des Schneideinsatzes am vorgegebenen Anschlag über die (elastische) Verformung der Schraube. Die Bestückung des Schneidenträgers mit dem Schneideinsatz wird auf diese Weise weiter vereinfacht. Als Befestigung des Schneideinsatzes bzw. der Führungsleiste wären allerdings auch weitere Befestigungsmöglichkeiten denkbar beispielsweise eine Führungsnut am Schneidenträger, in die ein am Schneideinsatz ausgeformter T-förmiger Keil eingeschoben wird.

Auch die Führungsleisten weisen vorteilhaft jeweils eine Durchgangsbohrung auf, um in entsprechenden Gewindebohrungen am Schneidenträger angeschraubt zu werden. Die Führungsleisten, die in entsprechende Nuten am Schneidenträger eingelegt werden, werden dabei über in Radialrichtung verlaufende Durchgangsbohrung in Gewindebohrungen am Schneidenträger angeschraubt. die Durchgangsbohrung erstreckt sich dabei jeweils zwischen einer Abstütz- bzw. Außenumfangsoberfläche und der Gegenanschlagsfläche der Führungsleiste.

Der Abstand der Durchgangsbohrung zur Nebenschneide wächst von einem Schneideinsatz zum nächstgrößeren um den gleichen Betrag an, wie der Abstand der Abstützfläche und der Gegenanschlagsfläche der zugeordneten Führungsleiste zur nächstgrößeren Führungsleiste. Dadurch ist eine im gesamten Durchmesserbereich gute Abstützung der Nebenschneide durch die Führungsleiste(n) in der Bohrung sichergestellt. Der Zuwachs kann dabei im gesamten Durchmesserbereich linear verlaufen oder einem beliebigen anderen Muster, beispielsweise einer Ähnlichkeitsreihe, folgen.

Als besonders geeignet als Schneideinsatz haben sich dabei Wechselplatten erwiesen, die nach Abnutzung ihrer Schneidkante ausgetauscht werden. Fehler, die durch das Wenden einer Wendeschneidplatte, bei der schon eine Nebenschneide, bzw. Führungsfase abgenutzt ist, entstehen könnten, werden so von vorne herein vermieden.

Der Einsatz von präzise und für jeden Nenndurchmesser separat gefertigten (Einweg-)Wechselplatten und Führungsleisten bietet gegenüber der Verwendung von baugleichen Wendeplatten für mehrere Nenndurchmesser, die über eine Einstellscheibe auf den gewünschten Nenndurchmesser eingestellt werden und Standard-Führungsleisten, die keine Einstellung auf den Nenndurchmesser erlauben, viele Vorteile:

Zwar muss für jeden Nenndurchmesser ein passender Bausatz (Wechselplatte und Führungsleiste(n)) bereitgestellt werden. Es ist aber klar, dass sich die Bestückung bzw. Montage des Tieflochbohrers erheblich vereinfacht, wenn die Einstellung des Nenndurchmessers einfach durch Auswahl des entsprechenden Bausatzes erfolgen kann. Denn das iterative Lavieren mit Wendeplatte, Einstellplatte, Nachmessen, etc. entfällt. Die Einstellung des Nenndurchmessers wird somit aus dem Montageverfahren in einen vorgelagerten Fertigungsprozeß der Wechselplatten und der Führungsleisten speziell für jeden Nenndurchmesser ausgelagert, der unter definierten Bedingungen und automatisiert abläuft, so dass neben einem erleichterten Zusammenbau des Tieflochbohrers auch eine insgesamt höhere Präzision bei der Einstellung des Nenndurchmessers erreicht werden kann.

Am Schneidenträger befindet sich an der Spitze des Tiefbohrers in der Spanfläche eine Ausnehmung, die als Schneideinsatzsitz von zwei Seitenflächen begrenzt wird, die einen zweiseitigen Anschlag für den Schneideinsatz bilden. Die Bestückung des derartig ausgestalteten Schneidenträgers fällt besonders leicht, denn auf diese Weise ist der Schneideinsatzes in allen drei Koordinatenrichtungen mit einem Handgriff lagefixiert und muss nur noch angeschraubt werden.

Wenn die beiden Anschlagflächen darüber hinaus einen Winkel kleiner 90° aufspannen und die den beiden Anschlagflächen zugewandten Seitenflächen einen größeren Winkel, ist zudem sichergestellt, dass es nicht zu einer Unbestimmtheit der Schneideinsatzlage aufgrund Toleranzabweichungen bei der Neigung der Seitenflächen zueinander kommt sondern auf jeden Fall ein zweiseitiges Anschlagen der Wechselschneidplatte bzw. des Schneideinsatzes vorgegeben ist.

Vorteilhaft ist der Tieflochbohrer als Einschneider bzw. Einlippen-Tieflochbohrer mit Innenkühlung ausgebildet. Die Erfindung ist aber nicht auf Einlippenwerkzeuge beschränkt. Insbesondere wären auch zweilippige Ausgestaltungen denkbar, bei denen pro Bausatz beispielsweise anstatt einer Führungsleiste eine weitere Wechselplatte vorgesehen ist. Auch Dreischneider mit drei Wechselplatten pro Bausatz wären denkbar.

Durch die Verwendung von Hartmetall-Schneideinsätzen und -Führungsleisten ist eine besonders hohe Verschleißfestigkeit der Bausätze für den erfindungsgemäßen Tieflochbohrer sichergestellt. Alternativ dazu weisen Schneideinsatz und Führungsleiste eine Hartstoff-beschichtung auf. Auch eine Kombination, also hart- oder weichbeschichtete Hartmetall-Schneideinsätze und -Führungsleisten wären denkbar, ebenso wie Keramik-Schneideinsätze und -Führungsleisten. Hartmetalle bestehen dabei aus metallischen Hartstoffen, die aufgrund ihrer hohen Härte als relativ spröde zu bezeichnen sind, und Bindern oder Bindemetallen vorwiegend der Eisengruppe (Eisen, Kobalt, Zink), die relativ weich und zäh sind und mit denen die Hartstoffe zusammengesintert werden. Auch Mischungen aus Keramik und Metallen (Cermets) sind den Hartmetallen zuzurechnen. Im Hartmetall wird also die hohe Härte und damit verschleißfestigkeit des metallischen Hartstoffes mit der Zähigkeit eines Bindemetalls verbunden. Je nach Mischungsverhältnis können somit die gewünschten Eigenschaften des Bohrerschafts genau eingestellt werden. Als Beschichtungsmaterial eignen sich dabei neben nitriergehärteten Schichten auch Diamant, kubisches Bornitrid, Korund, Sialone oder weitere nichtmetallische Werkstoffe.

Insgesamt stehen somit verschiedene Alternativen bereit, die es ermöglichen, das Bohrwerkzeug in einem universellen Spektrum von zu bearbeitenden Werkstoffen, sei es Gestein, Metall, CFK usw. einzusetzen.

Für den Schneidenträger hat sich dabei Vergütungsstahl als vorteilhaftes Material erwiesen, insbesondere im Hinblick auf Zähigkeit und Verwindungssteifigkeit, d.h. auf das übertragbare Drehmoment. Ebenfalls denkbar wäre es, einen wechselschneidplattenbestückten Schneidenträger einzusetzten, der selbst aus HSS oder Hartmetall besteht.

In der vorteilhaften Ausgestaltung nach Anspruch 8 ist der Schneidenträger dabei ein Bohrkopf, der stoffschlüssig mit dem Bohrerschaft verbunden ist, beispielsweise an den Bohrerschaft hartgelötet. Der höher belastete Bohrkopf kann dann aus einem teuereren Material und mit einer aufwendiger zu fertigenden Geometrie, insbesondere des oder der Innenkühlungskanäle, hergestellt werden, während der niedriger belastete Bohrerschaft aus billigerem und einfacher zu bearbeitendem Material besteht und seine einfachere Geometrie in einem eigenen Fertigungsverfahren erhält.

Der Innenkühlungskanal weist an der Bohrerspitze beispielsweise einen oder zwei kreisförmige Querschnitte auf, während am Bohrerschaft eine kreisrunde Durchgangsbohrung eingebracht ist.

In einer vorteilhaften Ausführungsform, die jedoch nicht unter die Ansprüche fällt, besteht der Bohrerschaft aus einem umgeformten Rohr aus vergütetem Stahl. Die gerade verlaufende Spannut kann dabei in einem leicht zu beherrschenden und schnellen Press- bzw. Walzbearbeitungsschritt in das Rohr eingedrückt werden, wobei gleichzeitig eine günstige Formgebung für den Innenkühlkanal erzielt werden kann.

Die einzelnen Merkmale der Ausführungsformen gemäss den Ansprüchen lassen sich, soweit es sinnvoll erscheint, beliebig kombinieren.

Nachfolgend werden anhand schematischer Zeichnungen bevorzugte Ausführungsformen der Erfindung näher erläutert. Es zeigen:
Fig. 1 eine perspektivische Explosionsansicht einer Ausführungsform des erfindungsgemäßen Tieflochbohrers;
Fig. 2 eine Draufsicht auf die Bohrerspitze des in Fig. 1 gezeigten Einlippen-Tieflochbohrers;
Fig. 3 eine Draufsicht auf die Bohrerspitze einer abgewandelten Ausführungsform;
Fig. 4 eine Detailansicht der eingebauten Wechselschneidplatte des Tieflochbohrers der Fig. 1;
Fig. 5 eine Detailansicht der eingebauten Wechselschneidplatte einer abgewandelten Ausführungsform;
Fig. 6 einen Nenndurchmesserbereich, der fünf Nenndurchmesser umfasst;
Fig. 7 die den Nenndurchmessern der Fig. 4 zugeordneten Bausätze.

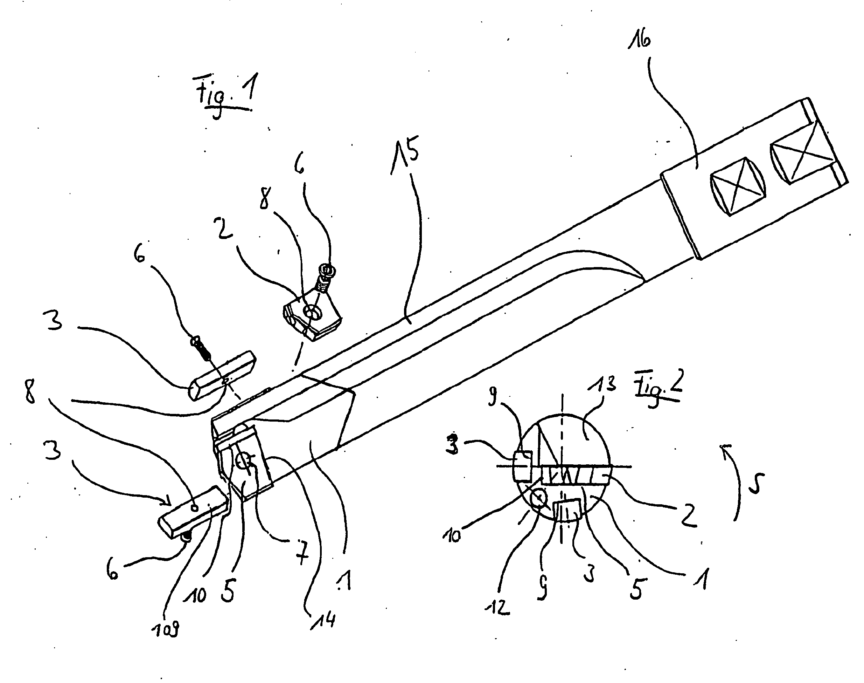

Zunächst wird auf die Figs. 1 und 2 bezug genommen, die eine einlippige Ausführungsform des erfindungsgemäßen Tieflochbohrers zeigt. Mit dem Bezugszeichen 1 ist dabei ein Bohrkopf bezeichnet, der auf einen Bohrerschaft 15 gelötet ist, welcher wiederum in eine Spannhülse 16 gelötet ist. Die Spannut ist dabei im wesentlichen v-förmig ausgeprägt, wobei der durch Span- und Spanfreifläche aufgespannte Winkel näherungsweise 90° entspricht.

Der Bohrkopf weist an seiner Spitze an der Spanfläche der Spannut 13 eine Ausnehmung auf, die mit ihrer Rückfläche 5 und den beiden Seitenflächen 10, 14 einen Sitz für eine Wechselschneidplatte 2 bildet. In die Rückfläche 5 ist dabei eine zentrische Gewindebohrung 7 eingebohrt, die eine durch eine Durchgangsbohrung in der der Wechselschneidplatte 2 geführte Schraube 6 aufnimmt.

Auf axialer Höhe des Wechselschneidplattensitzes sind über den Umfang des Bohrers des Weiteren zwei Ausnehmungen für Führungsleisten 3 vorgesehen, die mit ihrer in Radialrichtung weisenden, planflächigen Gegenanschlagsflächen 109 gegen eine Anschlagfläche 9 anschlagen. Jede Fläche 9 weist dabei eine in den Figuren unbenannt gebliebene zentrische Gewindebohrung zur Verschraubung der Führungsleisten 3 auf. -

Die Wechselschneidplatte 2 weist dabei ebenso wie die Führungsleisten 3' eine Durchgangsbohrung 8 auf, die bei Einbau mit einer entsprechenden Gewindebohrung 7 unter einem minimalen Versatz fluchtet, so dass eine schnelle Verschraubung der Wechselschneidplatte 2 wie auch der Führungsleisten 3' jeweils mit einer einzigen schraube 6 möglich ist.

In der gezeigten Ausführungsform besteht der feste Anschlag für die Führungsleisten jeweils aus der Rückfläche 9 des Führungsleistensitzes am Bohrkopf, während die Breite der Führungsleisten für alle Nenndurchmesser gleich ist. Die Führungsleisten der Bausätze für verschiedene Nenndurchmesser unterschieden sich somit nur durch ihre radiale Dicke, d.h. den Abstand zwischen Außenumfangsoberfläche und Gegenanschlagsfläche 109, der durch den jeweiligen Nenndurchmesser des Werkzeugs vorgegeben ist.

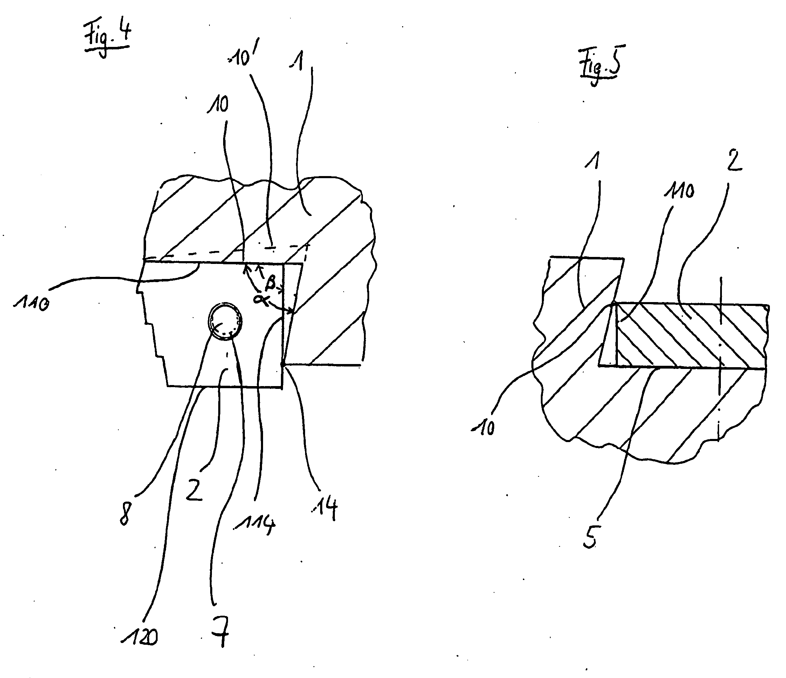

Zur Erläuterung der Positionierung der Wechselschneidplatte 2 über die Gewindebohrung 7 und die Durchgangsbohrung 8 sei auf Fig. 4 verwiesen, die eine vergrößerte Draufsicht auf die eingebaute Wechselplatte 2 zeigt. Es ist zu erkennen, dass die Durchgangsbohrung 8 - mit durchgezogener Linie gezeichnet - und die Gewindebohrung 7 - mit gestrichelter Linie gezeichnet - zueinander unter einem kleinen Versatz stehen, der bei Verschraubung der Wechselschneidplatte 2 dazu führt, dass die Platte 2 mit ihren Gegenanschlag-Seitenfläche 110 gegen die Anschlag-Seitenfläche 10 des Schneidplattensitzes gedrängt wird. Dieser Versatz ist hier allerdings deutlich überdimensioniert dargestellt.

Ferner schlägt die Platte 2 mit ihrer zweiten, orthogonal zur ersten verlaufenden Gegenanschlag-Seitenfläche 114 gegen einen sich auf der zweiten Anschlag-Seitenfläche 14 des Schneidplattensitzes befindlichen Punkt an und ist somit durch die Flächen 5, 10, 14 in allen drei Koordinatenrichtungen lagebestimmt.

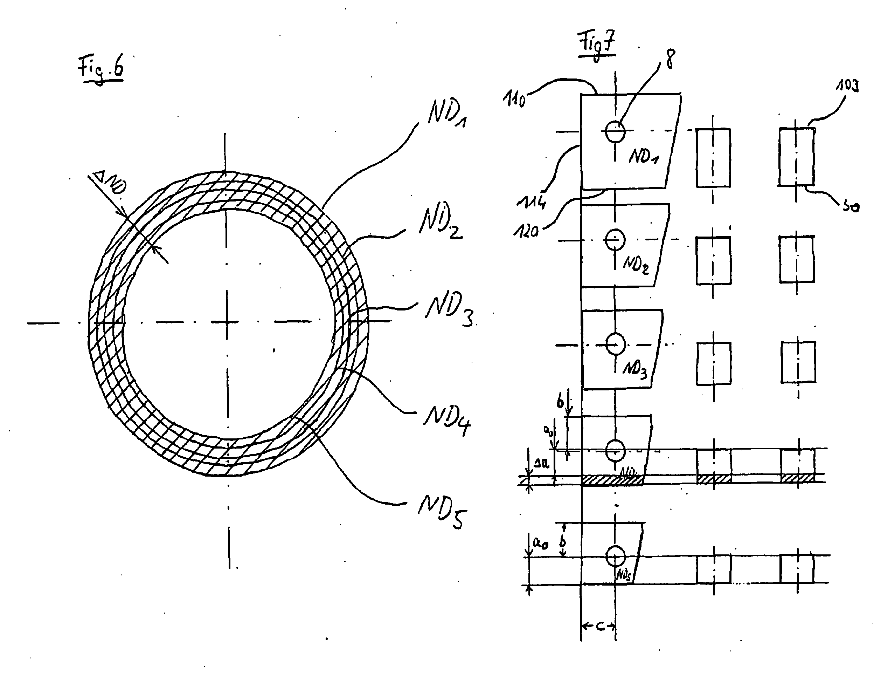

Es ist dabei klar, dass sämtliche Wechselschneidplatten 2 für jedweden Nenndurchmesser immer eine Durchgangsbohrung 8 im vorgegebenen Abstand zu den beiden Gegenanschlag-Seitenflächen 114; 110 aufweisen. Dies ist besonders deutlich der Fig. 7 zu entnehmen, die weiter unten erläutert wird.

Aus Fig. 4 ist außerdem zu entnehmen, dass die beiden Anschlag-Seitenflächen 10, 14 unter einem Winkel α von 80° zueinander hin geneigt sind, während die beiden Gegenanschlagflächen 110, 114 einen Winkel β von 90° aufspannen. Vorzugsweise liegt dabei die Schneidplatte 2 mit der gesamten Gegenanschlagseite 110 an der Anschlagfläche 10 an. Es wäre aber auch ein linienförmiger Anschlag denkbar, wie er durch eine geneigte Anschlagfläche 10' I mit gestrichelter Linie eingezeichnet ist. Durch die winklige Formgebung des Anschlag wird dabei sichergestellt, dass es nicht durch Toleranzabweichungen zu einer ungenügenden Anlage der Wechselschneidplatte 2 am Schneidenträger (dem Bohrkopf 1) kommt.

Fig. 5 zeigt eine Abwandlung, bei der eine linienförmige Anlage der Schneidplatte 2 am Anschlag 10 dadurch erreicht wird, dass die Grundfläche 5 des Schneidplattensitzes und die Anschlagfläche 10 einen Winkel aufspannen, der kleiner als 90° ist, während die Rückseite der Schneidplatte 2 und die Gegenanschlagsfläche 110 unter 90° zueinander verlaufen.

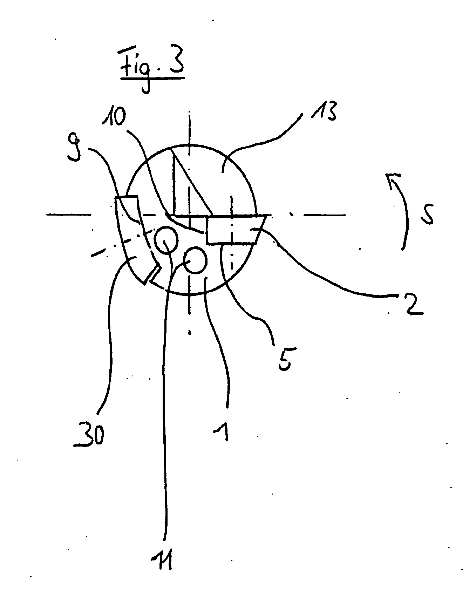

Bei der in Fig. 1 gezeigten Ausführungsform des erfindungsgemäßen Tieflochbohrwerkzeugs handelt es sich um einen Einlippen-Tieflochbohrer mit einer Schneide an der Wechselplatte 2, der über zwei Führungsleisten 3 über seinen Durchmesser in der Bohrung abgestützt wird. Unter Verweis auf die in den Fig. 2 und 3 gezeigten Bohrspitzenansichten sei diese erste Ausführungsform einer weiteren Ausführungsform gegenübergestellt, die nur eine Führungsleiste 30 aufweist. Es zeigt sich, dass die Erfindung ebenso bei einem derartigen Tieflochbohrwerkzeug realisiert werden kann. Dabei tritt der zusätzliche Vorteil auf, dass für den Innenkühlkanal (vgl. Austrittsöffnungen 12, 11) mehr Raum zur Verfügung steht.

In der Fig. 7 sind fünf Bausätze, jeweils bestehend mit aus einer Wechselschneidplatte und zwei Führungsleisten zur Bestückung des in Fig. 1 gezeigten Bohrwerkzeugs gezeigt. Die Bausätze decken dabei fünf Nenndurchmesser ND₁ bis ND₅ ab, die in einem Durchmesserbereich ΔND liegen (vgl. Fig. 6). Zur besseren Übersichtlichkeit sind dabei nur an der Wechselschneidplatte für den größten Nenndurchmesser ND₁ die Durchgangsbohrung 8, die Gegenanschlagsflächen 110, 114 und die Nebenschneide 120 und an einer zugehörigen Führungsleiste die Gegenanschlagsfläche 109 und die Abstützfläche 50 bezeichnet.

Fig. 6 zeigt dabei schraffiert den Nenndurchmesserbereich ΔND, in dem der universell passende Bohrkopf des Tieflochbohrers aus Fig. 1 durch Austausch der Schneidplatten und Führungsleisten auf die fünf Nenndurchmesser ND₁ bis ND₅ eingestellt werden kann. Die Durchgangsbohrung 8 hat dabei an allen Schneidplatten den gleichen Abstand c zur Gegenanschlagsfläche 114 und b zur Gegenanschlagsfläche 110. Der Abstand der Durchgangsbohrung zur Nebenschneide, der den Bohrungsdurchmesser bestimmt wächst dagegen ausgehend vom WErt a₀ bei Nenndurchmesser ND₅ an, und zwar von ND₅ auf ND₄ um den Wert Δa. Es ist zu erkennen, dass auch die radiale Dicke der Führungsleiste, d.h. die Länge der Durchgangsbohrung (gestrichelt eingezeichnet) entsprechend mitwächst.

## Patentansprüche

1. Tieflochbohrer mit einem Schneidenträger (1), einem auswechselbaren Schneideinsatz (2) und zumindest einer auswechselbarer Führungsleiste (3, 30), wobei der Schneidenträger (1) für einen vorbestimmten Nenndurchmesserbereich eingesetzt wird, wobei jedem Nenndurchmesser (ND₁ - ND₅) in dem Nenndurchmesserbereich (ΔND) ein gesonderter Bausatz aus einem Schneideinsatz (2) und zumindest einer Führungsleiste (3, 30) zugeordnet ist, für den am Schneidenträger (1) feste Anschläge (10, 14, 9) ausgebildet sind, und
am Schneideinsatz (2) eine Durchgangsbohrung (8) für eine Schraube (6) vorgesehen ist, die bei Anlage des Schneideinsatzes (2) am Anschlag (10, 14) gegenüber einer entsprechenden Gewindebohrung (7) an einem Schneideinsatzsitz auf dem Schneidenträger (1) einen Versatz aufweist, so dass der Schneideinsatz (2) bei Verschraubung gegen den Anschlag (10, 14) gepresst wird, und für den Schneideinsatz ein zweiseitiger Anschlag (10, 14) vorgesehen ist, der durch zwei den Schneideinsatzsitz zum Schneidenträger (1) hin begrenzende Anschlagflächen (10, 14) gebildet wird.

2. Tieflochbohrer nach Anspruch 1, **dadurch gekennzeichnet, dass** der Schneideinsatz (2) als Wechselplatte (2) ausgebildet ist.

3. Tieflochbohrer nach Anspruch 1 oder 2, **dadurch gekennzeichnet, dass** die beiden Anschlagflächen (10, 14) einen Winkel (α) kleiner 90° aufspannen und zwei den Anschlagflächen zugewandten Gegenanschlagflächen (110, 114) des Schneideinsatzes (2) einen größeren Winkel (β), vorzugsweise 90°.

4. Tieflochbohrer nach einem der vorhergehenden Ansprüche, **dadurch gekennzeichnet, dass** der Schneideinsatz (2) und die Führungsleiste (3, 30) aus Hartmetall bestehen.

5. Tieflochbohrer nach einem der vorhergehenden Ansprüche, **dadurch gekennzeichnet, dass** der Schneideinsatz (2) und die Führungsleiste (3, 30) eine Hartstoff-Beschichtung aufweisen.

6. Tieflochbohrer nach einem der vorhergehenden Ansprüche, **gekennzeichnet durch** die Ausgestaltung als Einlippen-Tieflochbohrer mit Innenkühlung.

7. Tieflochbohrer nach einem der vorhergehenden Ansprüche, **dadurch gekennzeichnet, dass** der Schneidenträger (1) aus Vergütungsstahl besteht.

8. Tieflochbohrer nach einem der vorhergehenden Ansprüche, **dadurch gekennzeichnet, dass** der Schneidenträger (1) ein Bohrkopf (1) ist, der stoffschlüssig mit einem in eine Spannhülse (16) gelöteten Bohrerschaft (15) verbunden ist.

## Claims

1. Deep hole drill with a cutting edge profile (1), a replaceable insert bit (2) and at least one replaceable jib (3, 30), wherein the cutting edge profile (1) is used for a predetermined nominal diameter range, wherein
a separate kit, consisting of an insert bit (2) and at least one jib (3, 30) is assigned to each nominal diameter (ND₁ - ND₅) within the nominal diameter range (ΔND), for which insert fixed stops (10, 14, 9) are formed on the cutting edge profile (1), and
a through bore (8) is provided on the insert bit (2) for a screw (6) which is offset with respect to a corresponding threaded bore (7) on an insert bit seat (5) on the cutting edge profile (1) when the insert bit (2) bears against the stop (10,14), so that the insert bit (2) is pressed against the stop (10, 14) during screwing, and
a bilateral stop (10,14) is provided for the insert bit, which stop is formed by two stop surfaces (10, 14) which limit the insert bit seat (5) towards the cutting edge profile (1).

2. The deep hole drill according to Claim 1, **characterised in that** the insert bit (2) is designed as an interchangeable plate (2).

3. The deep hole drill according to Claim 1 or 2, **characterised in that** the two stop surfaces (10, 14) span an angle (α) less than 90° and two counter-stop surfaces (110, 114) of the insert bit (2), facing towards the stop surfaces, have a larger angle (β), preferably 90°.

4. The deep hole drill according to one of the preceding claims, **characterised in that** the insert bit (2) and the jib (3, 10) consist of hard metal.

5. The deep hole drill according to one of the preceding claims, **characterised in that** the insert bit (2) and the jib (3, 30) have a hard coating.

6. The deep hole drill according to one of the preceding claims, **characterised by** the design as a single-lip deep hole drill with inner cooling.

7. The deep hole drill according to one of the preceding claims, **characterised in that** the cutting edge profile (1) consists of annealing steel.

8. The deep hole drill according to one of the preceding claims, **characterised in that** the cutting edge profile (1) is a boring head (1) which is connected positively to a drill shaft (15) soldered into a clamping sleeve (16).

## Revendications

1. Forêt pour trous profonds avec un support de lame (1), un insert de lame interchangeable (2) et au moins une baguette de guidage interchangeable (3, 30), le support de lame (1) étant utilisé pour un diameter nominal prédéfini, dans lequel
chaque diamètre nominal (ND₁ - ND₅) parmi la gamme de diamètres nominaux (ΔND) se voit attribuer élément de construction, constitué d'un insert de lame (2) et d'au moins une baguette de guidage (3, 30), pour lequel des butées fixes (10, 14, 9) sont formées dans le support de lame (1), et
dans l'insert de lame (2) est prévu dans un trou débouchant (8) pour une vis (6), comportant un déport sur le support de lame (1) lors de l'installation de l'insert de lame (2) sur la butée (10, 14), en face d'un alésage (7) correspondant sur un siège d'insert de lame (5), de façon à ce que l'insert de lame (2) soit serré contre la butée (10, 14) lors du vissage, et
une butée double face (10, 14) est prévue pour l'insert de lame, formée de deux surfaces de butée (10, 14) limitant le siège de l'insert de lame (5) par rapport au support de lame (1).

2. Forêt pour trous profonds selon la revendication 1, **caractérisé en ce que** l'insert de lame (2) est conçu comme une plaquette interchangeable (2).

3. Forêt pour trous profonds selon la revendication 1 ou 2, **caractérisé en ce que** les deux surfaces de butée (10, 14) définissent un angle (α) inférieur à 90°, et **en ce que** deux surfaces de contre-butée (110, 114) de l'insert de lame (2), qui sont tournées vers les surfaces de butée, définissent un angle plus grand (β), mesurant préférentiellement 90°.

4. Forêt pour trous profonds selon l'une des précédents revendications, **caractérisé en ce que** l'insert de lame (2) et la baguette de guidage (3, 30) sont constitutes de métal dur.

5. Forêt pour trous profonds selon l'une des précédents revendications, **caractérisé en ce que** l'insert de lame (2) et la baguette de guidage (3, 30) comportment un revêtement en matériau dur.

6. Forêt pour trous profonds selon l'une des précédents revendications, **caractérisé par** une configuration sous forme de forêt pour trous profonds à une lèvre avec refroidissement intérieur.

7. Forêt pour trous profonds selon l'une des précédents revendications, **caractérisé en ce que** le support de lame (1) est constitué d'acier amélioré.

8. Forêt pour trous profonds selon l'une des précédents revendications, **caractérisé en ce que** le support de lame (1) est une tête de forage (1), qui est reliée par complémentarité de matière avec une tige de forage (15) soudée dans une douille de serrage (16).
